# EUROPEAN PATENT APPLICATION

(11) **EP 1 076 449 A2**
(43) Date of publication of application: **14.02.2001**
(21) Application number: 00500177.1
(22) Date of filing: 04.08.2000
(51) Int. Cl.: H04N 1/00

(54) **Device applicable to capture and transmission of photographic images through networks of low bandwith**

(30) Priority: 09.08.1999 ES 9901825
(71) Applicant: Telefonica, S.A., 28013 Madrid (ES)
(72) Inventor: Bernardez, Rosa Maria, 28020 Madrid (ES); Lopez, Joaquin Ma, 28020 Madrid (ES); Hernandez, Jose Felix, 28020 Madrid (ES)
(74) Representative: Sanchez del Campo Gonzalez de Ubierna, Ramon

(57) **Abstract**

Device applicable to capture and transmission of photographic images through data networks of low bandwith (1), constituted starting from a digital chamber (2), a microprocessor fitted with associated peripheral elements and a transmitter within which, in the microprocessor context, a capture and image coding module, and an access device to the data network (8) are articulated, in which the capture and image coding module (3) is, in its turn, constituted starting from a transforming processor (4), a coefficient scaling processor (5), a ooding processor DAPW (6) and a coefficient coding processor (7), providing a compressed signal representing the image captured by the digital chamber (2) to a receiving device (10) through a telephonic data network.(9).

## Description

### BACKGROUND OF THE INVENTION

The present specification refers to an application for a Patent of Invention related to a device applicable to capture and transmission of photographic images through a data network of low bandwidth, the evident utility of which is to be configured as a device capable of digitally processing conventional photographic images and codifying them to be transmitted through networks of low bandwidth of the type of that habitually used for Telephony GSM and similar.

The invention offers an integrated solution for capturing and transmuting photographic images from remote locations through environs hardly suitable for transmiting data o presenting feeds scarcely stable.

### FIELD OF THE INVENTION

This invention will find application in the industry dedicated to the manufacture of elements, devices and electronic systems for data transmission; more specifically, applicable to the transmission of conventional photographic images.

### RELATED ART

The applicant is aware of the existence of electronic devices applicable to the transmission of data thru telephonic networks, relying on microprocessors or making use of them, which, by means of an adequate computer program, are capable of codifying signals in a suitable way, and module them both digitally and analoginally.

Specifically, he is aware of devices that, associated to a computer, are capable of scanning photographic images, codifying them and transmitting them thru the conventional telephonic network to be captured and reproduced in remote devices also connected to the telephonic network.

Some of the above mentioned devices are capable of capturing and transmitting photographic images from digital chambers storing said images like a digital file, avoiding the use of conventional photographic films and the later developing process, and they can be processed, from the first instant, by computer programs of processing of images, not being scanned.

Digital signals containing information of the described images can be transmitted via telephony by means of conventional hardware and software. Nevertheless, the conventional telephonic networks used by said devices must have an adequate bandwidth, so that the transmission can be performed at the necessary rate, and - rely on a good continuity in order to avoid interruptions at the transmission.

On the other hand, the devices known by the applicant are a part of a computer system that, optionally, incorporates image capture cards, transmitters and encoders, transmission modems, and a plurality of associated electronic devices.

In view of the actually existing devices, it would be desirable to rely on capture and photographic image transmission devices integrant in only one body all the constitutive elements, to be configured as a selfcontained body, allowing, also, telephony network of low-bandwidth of the type of those used for cellular telephony GSM to be used.

The applicant is not aware of the existence at present of any device of this type presenting the characteristics pointed out as desirable.

### SUMMARY OF THE INVENTION

The device applicable to capture and transmission of photographic images through data networks of'low bandwidth as proposed by the invention, constitutes an evident novelty in the field of application, presenting all the advantages pointed out as desirable, for a device of this type.

Specifically, the invention is constituted starting fromaphotographic digital chamber, a computer module and a transmitting unit.

The computer module, based on a microprocessor, has a transformation module, a coefficient scaling module, a DAPW coding module, controlled by a control device, the whole jointly performing both the coding and the compression of images, so optimising the volume of data to be transmitted for an adequate visualizing at the reception.

The mentioned devices are integrated in only one self-contained and portable apparatus, integrating all the protocols, methods and process necessary for coding and transmitting photographic images captured by a conventional digital chamber, and, optionally, it is possible to incorporate textual information in the transmitted images, allowing the visual infomation contained to be complemented.

The image processing, coding and compressing devices permit a prior and complete coding before performing a search of motion, speeding up the sequence coding and selecting a block generated with a minimun of information to be transmitted.

Optionally, the invention incorporates a receiving device, especially developed to act jointly with the mentioned device, and allowing the signal to be incorporated to the computer systems in which it is embodied.

The DAPW coding module performs a coding by means of bit plans of the most significant components of the image, being able to be graded in order to obtain an adequate level of resolution, distorting hierarchically the images into trees of wavelet pyramids, obtained as the result of applying, in a recoursive way a transformed wavelet.

On its side, the coefficient coding module (7) identifies the subtrees integrated in full by non-significant coefficients, and performing by bit planes of images.

### DESCRIPTION OF DRAWINGS

In order to complement this description and aid to a better understanding of the characteristics of the invention, the appending drawings, which are a part of this specification, show, by way of illustrative and non-limiting example, the following.

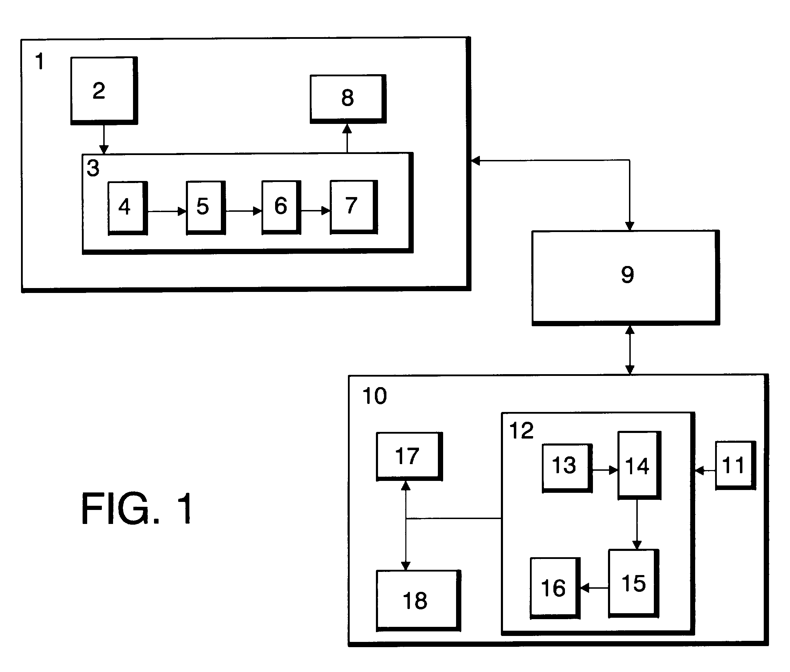

Figure 1 shows a block diagram of the invention, wherein the different devices composing it and the data communication lines interconnecting it are shown.

### PREFERRED EMBODIMENT OF THE INVENTION

In view of the figures, it can be seen that the device applicable to the capture and transmission of photographic images through data networks of low band-width (1) of the invention, is constituted starting from a digital chamber (2), a microprocessor fitted with associated peripheral elements and a transmitter within which, in the microprocessor context, a module of image capture and coding, and a device of access to the data network (8) are articulated.

The module of image capture and coding (4) is, in turn, constituted starting from a transformation - processor (4), a coefficient scaling processor (5), a DAPW coding processor (6), and a coefficient coding processor, providing a compressed signal representative of the image captured by the digital chamber (2) to a receiving device (10) through a telephonic data network.

The device applicable to the capture and transmission of photographic images through data networks of low bandwidth (1) is formed in only one volume, and, thru the incorporation of a conventional battery, it permits an adequate self-containing of operation, and it is not necessary to be connected to the conventional electric power distribition network.

The receiving device (10), univoquely associated with the device applicable to the capture and transmision of photographic images through data networks of low bandwidth (1), is constituted starting from an access device to the data network (11), which communicates with an image processing and decoding module (12), providing a signal to an image presentation device (17) or to a digital storage device (18).

The image processing and decoding module (12) is constituted starting from a coefficient decoder (13), a PAPW decoder (14), a coefficient scaling device (15) and atransformation processor (16).

It is not considered necessary to extend this description for any expert in the art to understand the scope of the invention and the advantages derived from it.

The materials, shape, size and arrangement of its components will be open to variation, provided that it does not imply any alteration to the essence of the invention.

The terms under which this specification has been described should be always taken in an ample and non-limitative sense.

## Claims

1. A device applicable to the capture and transmission of photographic images through data networks of los bandwidth (1), characterized in that it is constituted starting from a digital chamber (2), a microprocessor fitted with associated peripheral elements, and a transmitter within which, in the microprocessor context, an image capture and coding module, and an access device to the data network (8) are articulated, in which the image capture and coding module (3), in turn, is constituted starting from a transformation processor (4), a coefficient scaling processor (5), a DAPW coding processor (6), and a coefficient coding processor (7), providing a compressed signal representative' of the image capture by the digital chamber (2) to a receiving device (10) through a. telephonic data network (9).

2. A device applicable to the capture and transmission of photographic images through data networks of low bandwidth (1), according to claim 1, characterized in that it is integrated in only one volume, and, by means of the incorporation of a conventional battery, permit an adequate self-containing of operation, and it is not necessary to be connected to the electric power distribution network of conventional type.

3. A device applicable to the capture and transmission of photographic images through data networks of low bandwidth (1), according to claims 1 and 2, characterized in that a receiving device (10), univoquely associated with the device applicable to the photographic image capture and transmission through data networks of low bandwidth (1), is constituted starting from an access device to the data network (11), which communicates with an image processing and decoding module (12) providing a signal to an image presentation device (17) or a digital storage device (18), the image processing and decoding module (12) being constituted, in turn, starting from a coefficient decoder (13), a PAPW decoder (14), a coefficient scaling device (1-5), and a transformation processor (16).
